# EUROPEAN PATENT APPLICATION

(11) **EP 4 660 806 A1**
(43) Date of publication of application: **10.12.2025**
(21) Application number: 25178966.5
(22) Date of filing: 27.05.2025
(51) Int. Cl.: G06F 9/50

(54) **CLOUD OBTAINABILITY OPTIMIZATION AND STOCKOUT EXPERIENCE**

(30) Priority: 31.05.2024 US 202418731166
(71) Applicant: Google LLC, Mountain View, CA 94043 (US)
(72) Inventor: PARK, Mee Young, Mountain View, CA, 94043 (US); THOMPSON DE MELO, Thais, Mountain View, CA, 94043 (US); TIWARI, Swati, Mountain View, CA, 94043 (US); LIU, Bingyuan, Mountain View, CA, 94043 (US); PAN, Li, Mountain View, CA, 94043 (US); KONG, Yunchuan, Mountain View, CA, 94043 (US); ESAKKI, Venkatesan, Mountain View, CA, 94043 (US); MA, Jingfei, Mountain View, CA, 94043 (US); NIAN, Yiqun, Mountain View, CA, 94043 (US); TZUNG LIN, Ching, Mountain View, CA, 94043 (US); GWON-YIN WONG, Kevin, Mountain View, CA, 94043 (US); LOWE, Christian Thomas, Mountain View, CA, 94043 (US); BUSSMANN, Erika, Mountain View, CA, 94043 (US); QIN, Tianyuan, Mountain View, CA, 94043 (US); CRANE, Daniel Mitchell, Mountain View, CA, 94043 (US); FRY, Christopher James, Mountain View, CA, 94043 (US); LICHTENDAHL, Casey, Mountain View, CA, 94043 (US); DE WAELE, Stijn, Mountain View, CA, 94043 (US); WELCH, Brent B., Mountain View, CA, 94043 (US); VERMA, Vibhooti, Mountain View, CA, 94043 (US); HANISCH YEATMAN, Rebecca, Mountain View, CA, 94043 (US); MCKINLEY, Kathryn, Mountain View, CA, 94043 (US); DAHLIN, Michael, Mountain View, CA, 94043 (US); BHATTI, Nina, Mountain View, CA, 94043 (US); ZHENG, Lei, Mountain View, CA, 94043 (US)
(74) Representative: Betten & Resch

(57) **Abstract**

A method includes determining a first access control band based on a first historical computing usage of a distributed computing system by one or more workloads. The method also includes determining a second access control band based on a second historical computing usage of the distributed computing system. The method also includes determining a third access control band based on an amount of computing resources of the distributed computing system not defined by the first access control band or the second access control band. The method also includes receiving a request for a particular amount of computing resources and determining one or more access control bands from the first access control band, the second access control band, and the third access control band. The method also includes allocating to the one or more workloads at least a portion of the requested particular amount of computing resources.

## Description

### TECHNICAL FIELD

This disclosure relates to cloud obtainability optimization and stockout experience.

### BACKGROUND

Cloud computing platforms provide users with shared access to a distributed computing system. The distributed computing system may include pools of network, storage, hardware, and other computing resources that allow users to develop and execute applications. While large cloud computing platforms have vast amounts of resources that can be shared among many users, the capacity of the computing resources is still finite. To prevent running out of the finite capacity of computing resources, cloud computing platforms assign quotas that limit how much capacity users may consume and/or increase the total amount of capacity of the distributed computing system. However, applying quotas and increasing capacity may lead to inefficient use of the computing resources of the distributed computing system.

### SUMMARY

One aspect of the disclosure provides a computer-implemented method that when executed on data processing hardware causes the data processing hardware to perform operations for performing cloud obtainability optimization. The operations include determining a first access control band based on a first historical computing usage of a distributed computing system by one or more workloads associated with a user. The first access control band defines a first amount of computing resources of the distributed computing system. The operations also include determining a second access band based on a second historical computing usage of the distributed computing system by a zone of workloads that includes a plurality of workloads associated with a plurality of different users. The second access control band defines a second amount of computing resources of the distributed computing system. Determining a third access control band based on an amount of computing resources of the distributed system not defined by the first access control band or the second access control band. The third access control band defines a third amount of computing resources of the distributed computing system. The operations also include receiving a request for a particular amount of computing resources of the distributed computing system from the one or more workloads. The operations also include determining one or more access control bands from the first access control band, the second access control band, and the third access control band based on the requested particular amount of computing resources. The operations also include allocating at least a portion of the requested particular amount of computing resources to the one or more workloads based on the determined one or more access control bands.

Implementations of the disclosure may include one or more of the following optional features. In some implementations, the first historical computing usage of the distributed computing system includes a peak-to-average usage ratio of at least one workload associated with the user. Here, the operations may further include determining that the peak-to-average ratio satisfies a first threshold and determining the first amount of computing resources based on an average historical computing usage of the distributed computing system by the one or more workloads over a predetermined amount of time based on determining that the peak-to-average usage ratio satisfies the first threshold. In these implementations, the operations may further include determining that the peak-to-average usage ratio satisfies a second threshold and determining the first amount of resources further based on a minimum sustained computing usage of the distributed computing system by the one or more workloads over the predetermined amount of time based on determining that the peak-to-average usage ratio satisfies the second threshold. Here, the operations may further include determining that the peak-to-average usage ratio satisfies a third threshold and determining the first amount of resources further based on a linear interpolation between the average historical computing usage and the minimum sustained computing usage based on determining that the peak-to-average usage ratio satisfies the third threshold.

In some examples, the second historical computing usage of the distributed computing system includes an aggregate of an average computing usage by each respective workload of the zone of workloads. The first historical computing usage of the distributed computing system may include at least one of a peak-to-average usage ratio by the one or more workloads, a size of the one or more workloads, a family indicator of the one or more workloads, or a growth rate of the one or more workloads. In some examples, the first access control band is associated with a first likelihood that the first amount of computing resources will be available for allocation to the one or more workloads associated with the user, the second access control band is associated with a second likelihood that the second amount of computing resources will be available for allocation to the one or more workloads associated with the user, and the third access control band is associated with a third likelihood that the third amount of computing resources will be available for allocation to the one or more workloads associated with the user. The second likelihood is different from the first likelihood and the third likelihood is different from the first likelihood and the second likelihood. In these examples, the first likelihood may be greater than the second likelihood and the second likelihood is greater than the third likelihood. Availability of the second amount of computing resources for allocation to the one or more workloads may be based on a resource usage of the zone of workloads.

Another aspect of the disclosure provides a system that includes data processing hardware and memory hardware storing instructions that when executed on the data processing hardware causes the data processing hardware to perform operations. The operations include determining a first access control band based on a first historical computing usage of a distributed computing system by one or more workloads associated with a user. The first access control band defines a first amount of computing resources of the distributed computing system. The operations also include determining a second access band based on a second historical computing usage of the distributed computing system by a zone of workloads that includes a plurality of workloads associated with a plurality of different users. The second access control band defines a second amount of computing resources of the distributed computing system. Determining a third access control band based on an amount of computing resources of the distributed system not defined by the first access control band or the second access control band. The third access control band defines a third amount of computing resources of the distributed computing system. The operations also include receiving a request for a particular amount of computing resources of the distributed computing system from the one or more workloads. The operations also include determining one or more access control bands from the first access control band, the second access control band, and the third access control band based on the requested particular amount of computing resources. The operations also include allocating at least a portion of the requested particular amount of computing resources to the one or more workloads based on the determined one or more access control bands.

Implementations of the disclosure may include one or more of the following optional features. In some implementations, the first historical computing usage of the distributed computing system includes a peak-to-average usage ratio of at least one workload associated with the user. Here, the operations may further include determining that the peak-to-average ratio satisfies a first threshold and determining the first amount of computing resources based on an average historical computing usage of the distributed computing system by the one or more workloads over a predetermined amount of time based on determining that the peak-to-average usage ratio satisfies the first threshold. In these implementations, the operations may further include determining that the peak-to-average usage ratio satisfies a second threshold and determining the first amount of resources further based on a minimum sustained computing usage of the distributed computing system by the one or more workloads over the predetermined amount of time based on determining that the peak-to-average usage ratio satisfies the second threshold. Here, the operations may further include determining that the peak-to-average usage ratio satisfies a third threshold and determining the first amount of resources further based on a linear interpolation between the average historical computing usage and the minimum sustained computing usage based on determining that the peak-to-average usage ratio satisfies the third threshold.

In some examples, the second historical computing usage of the distributed computing system includes an aggregate of an average computing usage by each respective workload of the zone of workloads. The first historical computing usage of the distributed computing system may include at least one of a peak-to-average usage ratio by the one or more workloads, a size of the one or more workloads, a family indicator of the one or more workloads, or a growth rate of the one or more workloads. In some examples, the first access control band is associated with a first likelihood that the first amount of computing resources will be available for allocation to the one or more workloads associated with the user, the second access control band is associated with a second likelihood that the second amount of computing resources will be available for allocation to the one or more workloads associated with the user, and the third access control band is associated with a third likelihood that the third amount of computing resources will be available for allocation to the one or more workloads associated with the user. The second likelihood is different from the first likelihood and the third likelihood is different from the first likelihood and the second likelihood. In these examples, the first likelihood may be greater than the second likelihood and the second likelihood is greater than the third likelihood. Availability of the second amount of computing resources for allocation to the one or more workloads may be based on a resource usage of the zone of workloads.

In another example, a method includes determining a first access control band based on a first historical computing usage of a distributed computing system by one or more workloads. The method also includes determining a second access control band based on a second historical computing usage of the distributed computing system. The method also includes determining a third access control band based on an amount of computing resources of the distributed computing system not defined by the first access control band or the second access control band. The method also includes receiving a request for a particular amount of computing resources and determining one or more access control bands from the first access control band, the second access control band, and the third access control band. The method also includes allocating to the one or more workloads at least a portion of the requested particular amount of computing resources.

The details of one or more implementations of the disclosure are set forth in the accompanying drawings and the description below. Other aspects, features, and advantages will be apparent from the description and drawings, and from the claims.

### DESCRIPTION OF DRAWINGS

FIG. 1 is a schematic view of an example system of performing cloud obtainability optimization.
FIGS. 2A and 2B are schematic views of example allocation processes.
FIG. 3 is a schematic view of a plot of computing usage over time.
FIG. 4 is a schematic view of another plot of computing usage over.
FIG. 5 is a flowchart of an example arrangement of operations for a computer-implemented method of performing cloud obtainability optimization.
FIG. 6 is a schematic view of an example computing device that may be used to implement the systems and methods described herein.

Like reference symbols in the various drawings indicate like elements.

### DETAILED DESCRIPTION

Cloud computing platforms have increased in popularity in recent years. These cloud computing platforms provide users with shared access to a distributed computing system. The distributed computing system may include pools of network resources, storage resources, hardware resources, and other computing resources that allow users to develop and execute applications. While large cloud computing platforms have vast amounts of resources that can be shared among many users, the capacity of the computing resources is in fact finite. Current approaches of managing the finite computing resources include allocating capacity to on-demand workloads using a first-come-first-served basis with limited exceptions for low and very low reputation workloads. One major drawback of these approaches is that during time periods of high capacity demand, stockouts may occur where no computing resources are available, which may lead to unwanted downtime for some workloads.

One naive solution to this problem is to increase the amount of computing resources so that, even during high capacity demand periods, sufficient computing resources are still available. Yet, this naive solution leads to lower utilization of the overall amount of computing resources (e.g., more computing resources remain idle or unused) which is costly to the cloud computing providers. Another naive solution to this problem is to enforce quotas that limit the amount of computing resources a particular user or workload may use. Enforcing quotas, however, may cause the cloud computing platform to deny the particular user or workload access to computing resources, due to being over quota, while sufficient computing resources are in fact available for the particular user or workload.

Accordingly, implementations herein are directed towards methods and systems for performing cloud obtainability optimization. In particular, a method includes determining a first access control band based on a first historical computing usage of a distributed computing system by one or more workloads associated with a user. The first access control band defines a first amount of computing resources of the distributed computing system. The method also includes determining a second access control band based on a second historical computing usage of the distributed computing system by a zone of workloads. The second access control band defines a second amount of computing resources of the distributed computing system. The method also includes determining a third access control band based on a number of remaining available computing resources of the distributed computing system. The third access control band defines a third amount of computing resources of the distributed computing system. The method also includes receiving, from the one or more workloads, a request for a particular amount of computing resources of the distributed computing system and determining one or more access control bands from the first access control band, the second access control band, and the third access control band based on the requested particular amount of computing resources. The method also includes allocating at least a portion of the requested particular amount of computing resources based on the determined one or more access control bands.

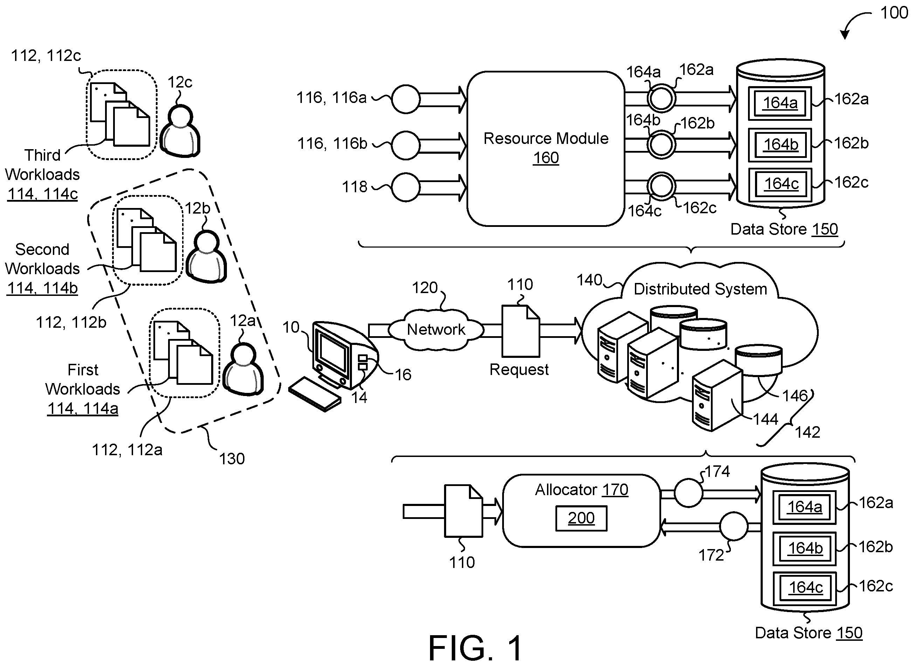

Referring now to FIG. 1, in some implementations, an example system 100 includes a distributed computing system 140 in communication, via a network 120, with one or more user devices 10 each associated with a respective user 12. The distributed computing system 140 may include multiple computers (e.g., a cloud computing environment) having scalable / elastic computing resources 142 including data processing hardware 144 and/or storage resources (e.g., memory hardware) 146. Each user device 10 may correspond to any computing device, such as a desktop workstation, a laptop workstation, or a mobile device (i.e., a smart phone). Moreover, each user device 10 includes computing resources (e.g., data processing hardware) 14 and/or storage resources (e.g., memory hardware) 16.

Each user 12 may be associated with one or more workloads 114 (i.e., each workload 114 is owned by or is otherwise controlled by a particular user 12). For example, each user 12 is associated with one or more folders 112 whereby each folder includes one or more workloads 114. In this example, each folder 112 represents a grouping of workloads 114 defined by the user 12. Here, a respective user 12 may define a production folder 112 having one or more production workloads 114, a development folder 112 having one or more development workloads 114, and a test folder 112 having one or more test workloads 114. The folders 112 are merely an exemplary option for organizing workloads 114 and associating workloads with users 12. The workloads 114 may be organized in any appropriate way based on the architecture of the distributed computing system 140. The workloads 114 include computational tasks that execute at or on the distributed computing system 140 by consuming computing resources 142. For example, the workloads 114 may include applications, services, or data transactions that execute at the distributed computing system 140. The computing resources 142 consumed by the workloads 114 may include virtual machines, storage resources, and/or networking resources.

In some examples, the workloads 114 consume computing resources 142 responsive to a particular request 110 by the user 12. For instance, the user 12 may generate a request 110 to create a new application that executes at the distributed computing system 140. On the other hand, workloads 114 may automatically generate requests 110 to consume computing resources 142 without any further input from the user 12 after being created. That is, the workload 114 may operate continuously or periodically (e.g., hourly, daily, weekly, etc.) and consume computing resources 142 during operation. For example, a workload 114 offers a particular service and requests additional resources during a surge in demand for the service.

The distributed computing system 140 may include a data store 150, a resource module 160, and an allocator 170. The resource module 160 is configured to determine access control bands 162 for each folder 112. As will become apparent, each access control band 162 is associated with a likelihood that a particular amount of computing resources 164 will be available for allocation to a particular folder 112 and/or to a particular user 12 and/or to a particular workload 114. When folders 112 include more than one workload 114, the resource module 160 determines the access control bands 162 at a folder-level. Thus, for a user 12 that is associated with more than one folder 112, the resource module 160 determines corresponding access control bands 162 for each of the one or more folders 112 associated with the user 12. On the other hand, when folders 112 include only one workload 114, the resource module 160 may determine the access control bands 162 at the workload-level.

In the example shown, there are three folders 112, 112a-c each including one or more workloads 114, 114a-c and associated with a user 12, 12a-c. In this example, for the sake of brevity, the resource module 160 only determines the access control bands 162 for a first folder 112a that includes one or more first workloads 114a associated with a first user 12a. That is, it is understood that the resource module 160 may determine access control bands 162 for any number of folders 112, users 12, workloads 114, or any other organizational structure applicable to the distributed computing system 140. Each respective access control band 162 defines a corresponding amount of computing resources 164 of the distributed computing system 140 that may be allocated to a respective folder 112. Moreover, each respective access control band 162 is associated with a likelihood that the corresponding amount of computing resources 164 will be available for allocation to the respective folder 112. That is, access control bands 162 define amounts of computing resources 164 that will likely be available without reserving computing resources 142 for any particular folder 112. Put another way, the corresponding amount of computing resources 164 does not represent particular computing resources 142 reserved for the particular folder 112 to use, but rather, a quantity of the total amount of computing resources 142 that will likely be available for allocation to the particular folder 112. For example, a respective access control band 162 may define a corresponding amount of computing resources 164 that represents ten (10) cores of computing resources 142 from a total amount of one hundred (100) computing resources 142 of the distributed computing system 140. In this example, the ten (10) cores defined by the respective access control band 162 may be any ten (10) of the one hundred (100) cores and do not correspond to ten (10) particular cores.

Continuing with the example shown, the resource module 160 determines a first access control band 162, 162a that defines a first amount of computing resources 164a of the distributed computing system 140 based on a first historical computing usage 116, 116a of the distributed computing system 140. Here, the first historical computing usage 116a represents past computing usage of the distributed computing system 140 by the first folder 112a (e.g., the one or more first workloads 114a) associated with the first user 12a. In some examples, the first historical computing usage 116a of the distributed computing system includes at least one of a peak-to-average usage ratio by the first folder 112a, a size of the first folder 112a, a family indicator of the first folder 112a, or a growth rate of the first folder 112a. The peak-to-average usage ratio by the first folder 112a represents a ratio of the highest computing usage to an average computing usage over a predetermined amount of time (e.g., one (1) day, seven (7) days, thirty (30) days, ninety (90) days, etc.). Thus, the peak-to-average usage ratio indicates a variability or consistency of particular workloads over the predetermined amount of time. The size of the first folder 112a represents a total computing usage (e.g., number of cores used, number of workloads, etc.) by the first folder 112a. The growth rate of the first folder 112a represents an increased amount of computing usage by the first folder 112a over a period of time.

In some implementations, the resource module 160 determines the first amount of computing resources 146a based on the peak-to-average ratio of the first folder 112a. That is, based on the value of the peak-to-average ratio, the resource module 160 determines the first amount of computing resources 146a based on different computing usage metrics. As will become apparent, using different usage metrics to determine the first amount of computing resources 146a directly impacts the first amount of computing resources 146a. Advantageously, this enables the resource module 160 to determine the first amount of computing resources 146a to be greater as the peak-to-average ratio of the first folder 112a is lower, and vice versa.

In one example, based on determining that the peak-to-average ratio satisfies a first threshold (e.g., peak-to-average ratio equal to one (1)), the resource module 160 may determine the first amount of computing resources 146a based on an average historical computing usage of the distributed computing system 140 by the first folder 112a over a predetermined amount of time (e.g., thirty (30) days). In another example, based on determining that the peak-to-average ratio satisfies a second threshold (e.g., peak-to-average ratio is greater than or equal to three (3)), the resource module may determine the first amount of computing resources 146a based on a minimum sustained computing usage of the distributed computing system 140 by the first folder 112a over the predetermined amount of time (e.g., thirty (30) days). The minimum sustained computing usage may represent a predetermined percentile, such as a first percentile, of computing usage of the distributed computing system 140 by the first folder 112a over the predetermined amount of time. In yet another example, based on determining that the peak-to-average ratio satisfies a third threshold (e.g., peak-to-average ratio greater than one (1) and less than three (3)), the resource module 160 may determine the first amount of computing resources 146a based on a linear interpolation between the average historical computing usage and the minimum sustained computing usage. Here, the first amount of computing resources 146a corresponds to a value between the average historical computing usage and the minimum sustained computing usage.

In some implementations, the resource module 160 determines the first amount of resources 146a further based on the size of the first folder 112a, the family indicator of the first folder 112a, age of the first folder 112a, and/or the growth rate of the first folder 112a. That is, in addition to, or in lieu of, determining the first amount of resources 146a based on the average historical computing usage or the minimum sustained computing usage, the resource module 160 determines the first amount of resources 146a based on the size of the first folder 112a, the family indicator of the first folder 112a, age of the first folder 112a, and/or the growth rate of the first folder 112a. As such, in some examples, the resource module 160 may increase the first amount of computing resources 146a based on the size of the first folder 112a. For instance, the resource module 160 may classify the first folder 112a as small, medium, or large, and then scale the first amount of computing resources 146a based on the classification. In some configurations, the resource module 160 scales the first amount of computing resources by a first value (e.g., 1.05) based on the large classification, a second value (e.g., 1.1) based on the medium classification, and a third value (e.g., 1.2) based on the small classification. In other examples, the resource module 160 may scale the first amount of computing resources 146a based on the growth rate of the first folder 112a. In particular, when the growth rate satisfies a growth threshold (e.g., indicating sustained growth), the resource module 160 may increase the amount of first computing resources 146a.

Moreover, the resource module 160 determines a second access control band 162, 162b defining a second amount of computing resources 164b of the distributed computing system 140 based on a second historical computing usage 116, 116b of the distributed computing system 140. Here, the second historical computing usage 116b represents past computing usage of the distributed computing system 140 by a zone of workloads (e.g., zone of folders) 130. The zone of workloads 130 includes a plurality of workloads 114 associated with a plurality of different users 12. For instance, the zone of folders 130 may include the first folder 112a associated with the first user 12a and at least one other folder 112. The at least one other folder 112 may be associated with the first user 12a or with another user 12. The users 12 or folders 112 may be assigned to a zone based on a geographical location of the computing resources, geographical locations of the users 12, historical workload patterns for the user 12, etc. In some implementations, the resource module 160 groups one or more folders 112 into a respective zone of folders 130 based on historical computing usage of the distributed computing system 140. For instance, the resource module 160 may group folders 112 that have similar historical computing usages (e.g., similar peak-to-average ratio or average computing usage) into the same zone of folders 130. In this manner, each folder 112 in the zone of folders 130 may have similar predicted computing usages based on the similar historical computing usages. In the example shown, the zone of folders 130 includes the first folder 112a and the second folder 112b but does not include the third folder 112c.

The second historical computing usage 116b, in some implementations, represents the past computing usage of the distributed computing system by each folder 112 in the zone of folders 130. In some examples, the second historical computing usage 116b includes an aggregate of an average computing usage by each respective folder 112 in the zone of folders 130. As such, the second amount of computing resources 164 is shared among each folder 112 in the zone of folders 130. In these examples, the resource module 160 determines the second access control band 162b based on the aggregate of the average computing usage by each respective folder in the zone of folders 130. Notably, while the first access control band 162a is only associated with the first folder 112a, the second access control band 162b is associated with each folder 112 in the zone of folders 130 (or, in some examples, each user 12 in the zone of users 12). That is, the second amount of computing resources 164b of the second access control band 162 are shared among the workloads 114 assigned to the zone of folders 130. In some examples, an availability of the second amount of computing resources 164b for allocation to the first folder 112a is based on a resource usage of the zone of workloads 130. In particular, since the second amount of computing resources 164b are shared among the zone of folders 130, the second amount of computing resources 164 are allocated on a first-come-first-serve basis among the zone of folders 130 (i.e., the workloads 114 and/or users 12 associated wit the zone of folders 130).

The resource module 160 determines a third access control band 162, 162c defining a third amount of computing resources 164c of the distributed computing system 140 based on an amount of computing resources 118 of the distributed computing system 140 (i.e., resources not assigned or included in the first access control band 162a or the second access control band 162b). In some examples, the number of remaining available computing resources 118 corresponds to the quantity of computing resources 142 not associated with any other access control band 162. In other examples, the number of remaining available computing resources 118 may include a subset of computing resources 142 associated with another access control band 162 but are not currently being used. The third amount of computing resources 164c are shared among every folder 112 of the distributed computing system 140.

Each access control band 162 is associated with a likelihood that the corresponding amount of computing resources 164 will be available for the first folder 112a. In particular, the first access control band 162a is associated with a first likelihood that the first amount of computing resources 164a will be available for allocation to the first folder 112a associated with the first user 12a. For example, the first likelihood includes a 0.9995 likelihood or chance (i.e., 99.95% likelihood at any given point in time) that the first amount of computing resources 164 will be available for consumption by workloads 114 of the first folder 112a or corresponding user 12a. The second access control band 162b is associated with a second likelihood that the second amount of computing resources 164b will be available for allocation to the first folder 112a associated with the first user 12a. The first likelihood is greater than the second likelihood. For example, the second likelihood is a 0.995 likelihood that the second amount of computing resources 164 will be available when the first likelihood is 0.9995. Moreover, the third access control band 162c is associated with a third likelihood that the third amount of computing resources 164c will be available for allocation to the first folder 112a associated with the first user 12a. The first likelihood and second likelihood are each greater than the third likelihood.

The resource module 160 may send the first access control band 162a, the second access control band 162b, and the third access control band 162c to the data store 150 that stores the access control bands 162. The resources module 160 may update the access control bands 162 periodically (e.g., once an hour, once a day, once a week, etc.). Thus, since the resource module 160 determines the access control bands 162 based on historical computing usage 116, the access control bands 162 may increase or decrease the amount of computing resources 164 as computing usage increases or decreases over time and/or the peak-to-average ratio changes over time.

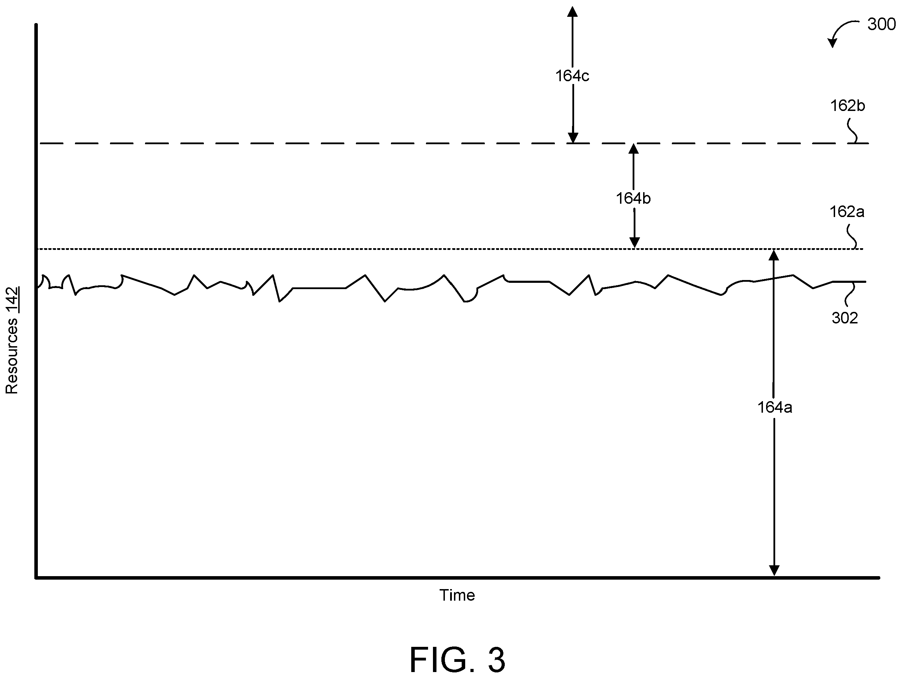

FIG. 3 illustrates a first example plot 300 showing the access control bands 162a-b and on-demand computing usage 302 for an example folder 112 (and/or workload 114 and/or user 12). The x-axis of the plot 300 denotes time that increases from left to right and the y-axis of the plot 300 denotes an amount of computing resources 142 that increases from the bottom to the top. In the first example plot 300, the on-demand computing usage 302 represents the amount of computing resources requested or consumed by the example folder 112 over time.

Notably, the peak-to-average usage ratio of the on-demand computing usage 302 satisfies the third threshold such that the first amount of computing resources 164a of the first access control band 162a is determined based on a linear interpolation between the average historical computing usage and the minimum sustained computing usage of the on-demand computing usage 302. Here, the first amount of computing resources 164a is also scaled by a scaling factor based on a size of the example folder 112. Thus, the area beneath the first access control band 162a represents the first amount of computing resources 164a. The area beneath the second access control band 162b and above the first access control band 162a represents the second amount of computing resources 164b. Here, the second amount of computing resources 164b may be determined based on an aggregate of an average computing usage by each respective folder 112 of a zone of folders 130. Finally, the area above the second access control band 162b represents the third amount of computing resources 164c. In the first example plot 300, the amount of computing resources 164 defined by the access control bands 162 remain constant or near constant since the average computing usage remains near constant. Notably, the on-demand computing usage 302 remains below the first access control band 162a (e.g., less than the first amount of computing resources 164a) such that the likelihood of the on-demand computing usage 302 being allocated to the example folder 112 is equal to the first likelihood for the entire duration of the plot 300.

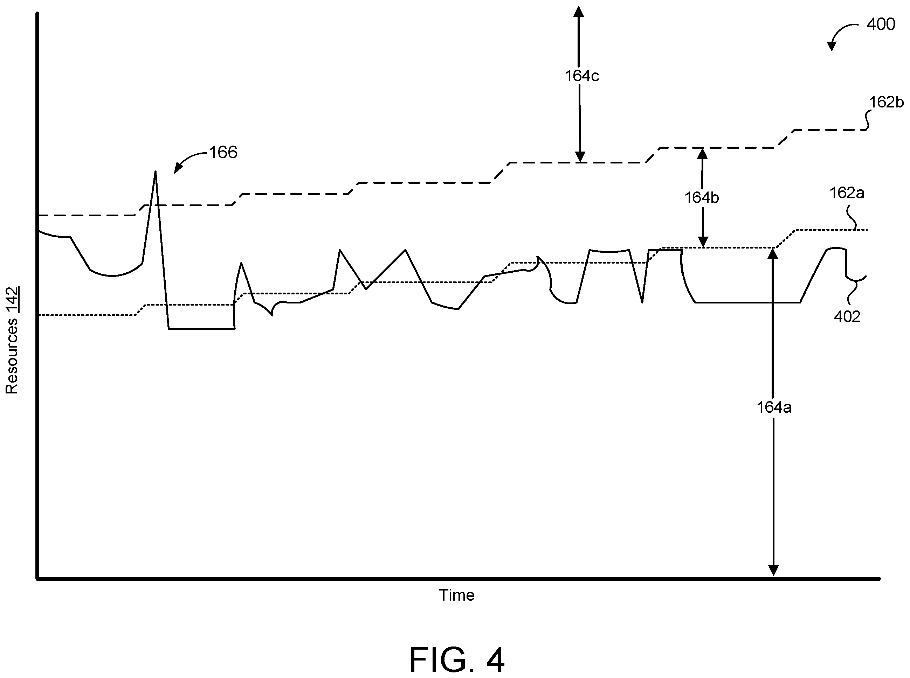

FIG. 4 illustrates a second example plot 400 showing the access control bands 162 and on-demand computing usage 402 of an example folder 112. The x-axis of the plot 400 denotes time that increases from left to right and the y-axis of the plot 400 denotes an amount of computing resources 142 that increases from the bottom to the top. In the second example plot 400, the on-demand computing usage 402 represents the amount of computing resources requested by the example folder 112 over time.

In the second example plot 400, the area beneath the first access control band 162a represents the first amount of computing resources 164a, the area beneath the second access control band 162b and above the first access control band 162a represents the second amount of computing resources 164b, and the area above the second access control band 162b represents the third amount of computing resources 164c. In this example, the amount of computing resources 164 defined by the access control bands 162 increases over time as the on-demand computing usage 402 increases over time. Notably, the portion of the on-demand computing usage 402 below the first access control band 162a (e.g., less than the first amount of computing resources 164a) has a likelihood of being allocated to the example folder 112 that is equal to the first likelihood. Similarly, the portion of the on-demand computing usage 402 above the first access control band 162a and below the second access control band 162b has a likelihood of being allocated to the example folder 112 that is equal to the second likelihood. Lastly, the portion of the on-demand computing usage 402 above the second access control band 162b has a likelihood of being allocated to the example folder 112 that is equal to the third likelihood. For example, a peak 166 in the on-demand computing usage 402 extends past the first access control band 162a and the second access control band 162b such that, during that peak, the example folder 112 (and/or the workloads 114 and/or users 12 associated with the folder 112) has a likelihood of being allocated additional computing resources 142 that is equal to the third likelihood.

Referring back to FIG. 1, the allocator 170 is configured to execute an allocation process 200 that allocates computing resources 142 based on received requests 110. The requests 110 may be generated by users 12 using one of the one or more user device 10. For instance, the user 12 may generate a request 110 to create an application or to perform a transaction. Alternatively, the request 110 may be generated by one of the workloads 114 without any user input. For instance, the workload 114 may operate automatically and request computing resources 142 from the distributed computing system 140. In the example shown, the allocator 170 receives the request 110 that requests a particular amount of computing resources from the first folder 112a associated with the first user 12a.

To that end, based on receiving the request 110, the allocator 170 may obtain a computing availability 172 that represents available computing resources 142 from the amount of computing resources 164 of each of the access control bands 162. Initially, the allocator 170 may determine whether the computing availability 172 is sufficient to allocate the particular amount of computing resources to the first folder 112a. When the computing availability 172 is sufficient, the allocator 170 allocates the particular amount of computing resources to the first folder 112a. On the other hand, when the computing availability 172 is insufficient, the allocator 170 may deny the request 110 or allocate only a portion of the requested particular amount of computing resources.

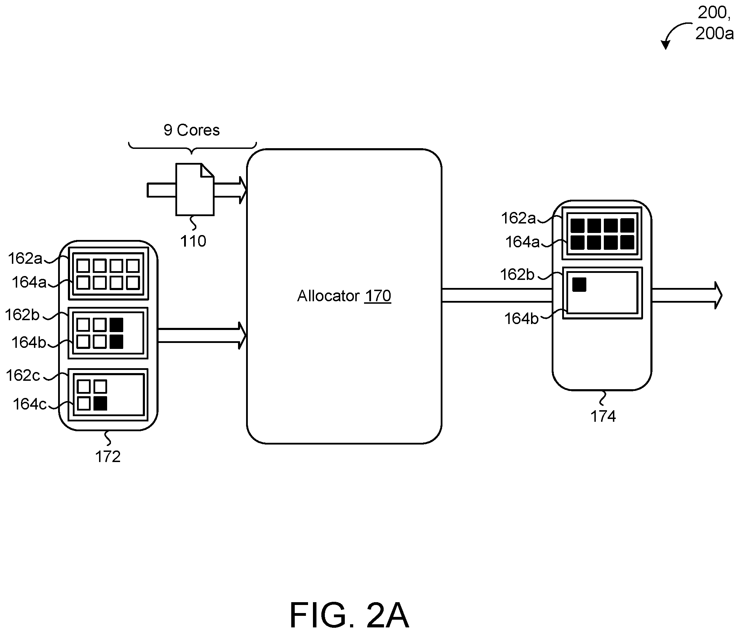

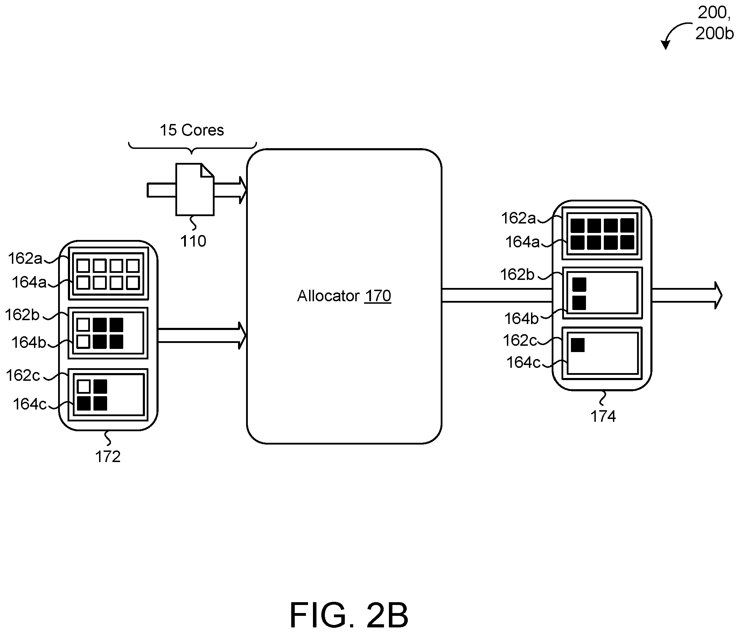

As discussed in greater detail with reference to FIGS. 2A and 2B, the allocator 170 may determine one or more access control bands 162 from the first access control band 162a, the second access control band 162b, and the third access control band 162c based on the requested particular amount of computing resources and allocate at least a portion of the requested particular amount based on the determined one or more access control bands 174. The allocator 170 may send the determined one or more access control bands 174 and the requested particular amount to the data store 150 to update the computing availability 172.

FIGS. 2A and 2B show example allocation processes 200 executed by the allocator 170. FIG. 2A shows a first example allocation process 200, 200a whereby the request 110 requests a particular amount of computing resources including 9 cores. Moreover, the allocator 170 receives the computing availability 172 that indicates available computing resources from the first access control band 162a, the second access control band 162b, and the third access control band 162c. Here, the amount of available computing resources 164 are denoted as white squares while the amount of unavailable computing resources 164 are denoted as black squares. When determining the one or more access control bands 162 for allocating the particular amount of computing resources, the allocator 170 allocates first from the first access control band 162a, second from the second access control band 162b, and third from the third access control band 162c. Continuing with the example shown, the first amount of computing resources 164a indicates a quantity of eight (8) available computing resources, the second amount of computing resources 164b indicates a quantity of four (4) available computing resources and two (2) unavailable computing resources, and the third amount of computing resources 164c indicates a quantity of three (3) available computing resources and one (1) unavailable computing resources. To that end, the allocator 170 identifies eight (8) computing resources from the first access control band 162a and one (1) computing resources from the second access control band 162b to satisfy the request 110. Thus, the determined one or more access control bands 174 include the first access control band 162a and the second access control band 162b and the nine (9) identified computing resources are now denoted as unavailable.

FIG. 2B shows a second example allocation process 200, 200b whereby the request 110 requests a particular amount of computing resources including 15 cores. Moreover, the allocator 170 receives the computing availability 172 that indicates available computing resources from the first access control band 162a, the second access control band 162b, and the third access control band 162c. Here, the amount of available computing resources 164 are denoted as white squares while the amount of unavailable computing resources 164 are denoted as black squares. When determining the one or more access control bands 162 for allocating the particular amount of computing resources, the allocator 170 allocates first from the first access control band 162a, second from the second access control band 162b, and third from the third access control band 162c. Continuing with the example shown, the first amount of computing resources 164a indicates a quantity of eight (8) available computing resources, the second amount of computing resources 164b indicates a quantity of two (2) available computing resources and four (4) unavailable computing resources, and the third amount of computing resources 164c indicates a quantity of one (1) available computing resources and three (3) unavailable computing resources. To that end, the allocator 170 identifies eight (8) computing resources from the first access control band 162a, two (2) computing resources from the second access control band 162b, and one (1) computing resource from the third access control band 162c. Moreover, the allocator 170 determines that the eleven (11) identified computing resources is insufficient to satisfy the entire particular requested amount of computing resources. Thus, the allocator 170 allocates a portion of the requested amount (e.g., eleven (11) computing resources) to partially satisfy the request while the request for the remaining four (4) cores is denied. Thus, the determined one or more access control bands 174 include the first access control band 162a, the second access control band 162b, and the third access control band 162c and the eleven (11) identified computing resources are now denoted as unavailable.

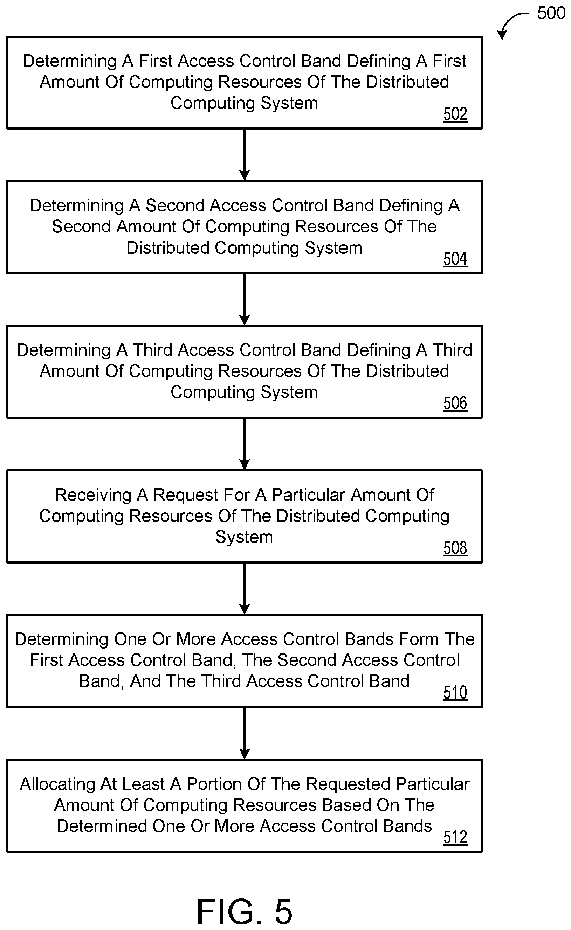

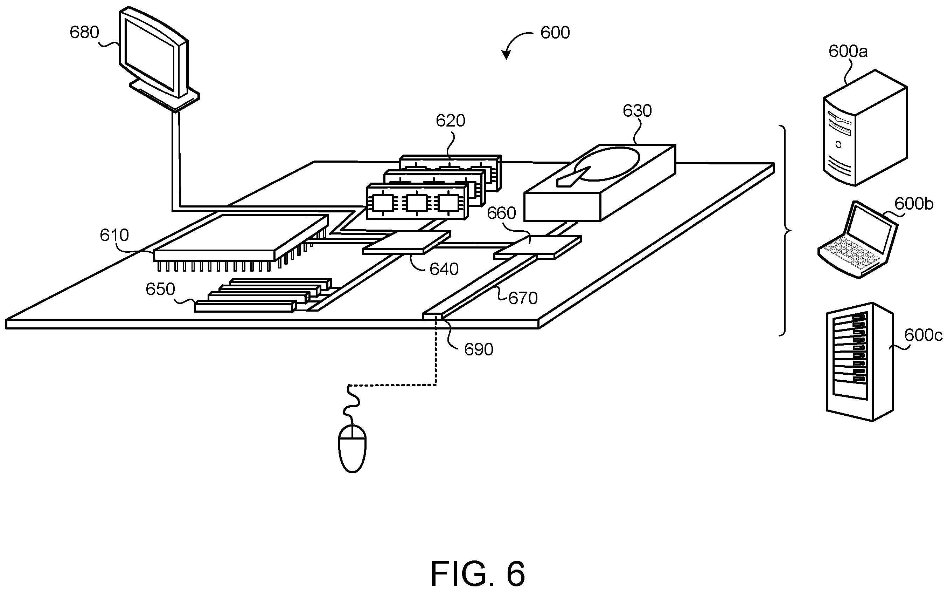

FIG. 5 is a flowchart of an example arrangement of operations for a computer-implemented method 500 of performing cloud obtainability optimization. The method 500 may execute on data processing hardware 610 (FIG. 6) using instructions stored on memory hardware 620 (FIG. 6) that may reside on the user device 10 and/or the distributed computing system 140 of FIG. 1 each corresponding to a computing device 600 (FIG. 6).

At operation 502, the method 500 includes determining a first access control band 162a based on a first historical computing usage 116a of a distributed computing system by one or more first workloads 114a associated with a first user 12a. The first access control band 162a defines a first amount of computing resources 164a of the distributed computing system 140. At operation 504, the method 500 includes determining a second access control band 162b based on a second historical computing usage 116b of the distributed computing system by a zone of workloads 130. The second access control band 162b defines a second amount of computing resources 164b of the distributed computing system 140. The zone of workloads 130 including a plurality of workloads associated with a plurality of different users. At operation 506, the method 500 includes determining a third access control band 162c based on an amount of computing resources of the distributed computing system not defined by the first access control band 162a or the second access control band 162b. The third access control band 162c defines a third amount of computing resources 164c of the distributed computing system 140. At operation 508, the method 500 includes receiving, from the one or more first workloads 114a, a request 110 for a particular amount of computing resources of the distributed computing system 140. At operation 510, the method 500 includes determining one or more access control bands 162 from the first access control band 162a, the second access control band 162b, and the third access control band 162c based on the requested particular amount of computing resources. At operation 512, the method 500 includes allocating at least a portion of the requested particular amount of computing resources to the one or more first workloads 114a based on the determined one or more access control bands 174.

FIG. 6 is a schematic view of an example computing device 600 that may be used to implement the systems and methods described in this document. The computing device 600 is intended to represent various forms of digital computers, such as laptops, desktops, workstations, personal digital assistants, servers, blade servers, mainframes, and other appropriate computers. The components shown here, their connections and relationships, and their functions, are meant to be exemplary only, and are not meant to limit implementations of the inventions described and/or claimed in this document.

The computing device 600 includes a processor 610, memory 620, a storage device 630, a high-speed interface/controller 640 connecting to the memory 620 and high-speed expansion ports 650, and a low speed interface/controller 660 connecting to a low speed bus 670 and a storage device 630. Each of the components 610, 620, 630, 640, 650, and 660, are interconnected using various busses, and may be mounted on a common motherboard or in other manners as appropriate. The processor 610 can process instructions for execution within the computing device 600, including instructions stored in the memory 620 or on the storage device 630 to display graphical information for a graphical user interface (GUI) on an external input/output device, such as display 680 coupled to high speed interface 640. In other implementations, multiple processors and/or multiple buses may be used, as appropriate, along with multiple memories and types of memory. Also, multiple computing devices 600 may be connected, with each device providing portions of the necessary operations (e.g., as a server bank, a group of blade servers, or a multi-processor system).

The memory 620 stores information non-transitorily within the computing device 600. The memory 620 may be a computer-readable medium, a volatile memory unit(s), or non-volatile memory unit(s). The non-transitory memory 620 may be physical devices used to store programs (e.g., sequences of instructions) or data (e.g., program state information) on a temporary or permanent basis for use by the computing device 600. Examples of non-volatile memory include, but are not limited to, flash memory and read-only memory (ROM) / programmable read-only memory (PROM) / erasable programmable read-only memory (EPROM) / electronically erasable programmable read-only memory (EEPROM) (e.g., typically used for firmware, such as boot programs). Examples of volatile memory include, but are not limited to, random access memory (RAM), dynamic random access memory (DRAM), static random access memory (SRAM), phase change memory (PCM) as well as disks or tapes.

The storage device 630 is capable of providing mass storage for the computing device 600. In some implementations, the storage device 630 is a computer-readable medium. In various different implementations, the storage device 630 may be a floppy disk device, a hard disk device, an optical disk device, or a tape device, a flash memory or other similar solid state memory device, or an array of devices, including devices in a storage area network or other configurations. In additional implementations, a computer program product is tangibly embodied in an information carrier. The computer program product contains instructions that, when executed, perform one or more methods, such as those described above. The information carrier is a computer- or machine-readable medium, such as the memory 620, the storage device 630, or memory on processor 610.

The high speed controller 640 manages bandwidth-intensive operations for the computing device 600, while the low speed controller 660 manages lower bandwidth-intensive operations. Such allocation of duties is exemplary only. In some implementations, the high-speed controller 640 is coupled to the memory 620, the display 680 (e.g., through a graphics processor or accelerator), and to the high-speed expansion ports 650, which may accept various expansion cards (not shown). In some implementations, the low-speed controller 660 is coupled to the storage device 630 and a low-speed expansion port 690. The low-speed expansion port 690, which may include various communication ports (e.g., USB, Bluetooth, Ethernet, wireless Ethernet), may be coupled to one or more input/output devices, such as a keyboard, a pointing device, a scanner, or a networking device such as a switch or router, e.g., through a network adapter.

The computing device 600 may be implemented in a number of different forms, as shown in the figure. For example, it may be implemented as a standard server 600a or multiple times in a group of such servers 600a, as a laptop computer 600b, or as part of a rack server system 600c.

Various implementations of the systems and techniques described herein can be realized in digital electronic and/or optical circuitry, integrated circuitry, specially designed ASICs (application specific integrated circuits), computer hardware, firmware, software, and/or combinations thereof. These various implementations can include implementation in one or more computer programs that are executable and/or interpretable on a programmable system including at least one programmable processor, which may be special or general purpose, coupled to receive data and instructions from, and to transmit data and instructions to, a storage system, at least one input device, and at least one output device.

These computer programs (also known as programs, software, software applications or code) include machine instructions for a programmable processor, and can be implemented in a high-level procedural and/or object-oriented programming language, and/or in assembly/machine language. As used herein, the terms "machine-readable medium" and "computer-readable medium" refer to any computer program product, non-transitory computer readable medium, apparatus and/or device (e.g., magnetic discs, optical disks, memory, Programmable Logic Devices (PLDs)) used to provide machine instructions and/or data to a programmable processor, including a machine-readable medium that receives machine instructions as a machine-readable signal. The term "machine-readable signal" refers to any signal used to provide machine instructions and/or data to a programmable processor.

The processes and logic flows described in this specification can be performed by one or more programmable processors, also referred to as data processing hardware, executing one or more computer programs to perform functions by operating on input data and generating output. The processes and logic flows can also be performed by special purpose logic circuitry, e.g., an FPGA (field programmable gate array) or an ASIC (application specific integrated circuit). Processors suitable for the execution of a computer program include, by way of example, both general and special purpose microprocessors, and any one or more processors of any kind of digital computer. Generally, a processor will receive instructions and data from a read only memory or a random access memory or both. The essential elements of a computer are a processor for performing instructions and one or more memory devices for storing instructions and data. Generally, a computer will also include, or be operatively coupled to receive data from or transfer data to, or both, one or more mass storage devices for storing data, e.g., magnetic, magneto optical disks, or optical disks. However, a computer need not have such devices. Computer readable media suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto optical disks; and CD ROM and DVD-ROM disks. The processor and the memory can be supplemented by, or incorporated in, special purpose logic circuitry.

To provide for interaction with a user, one or more aspects of the disclosure can be implemented on a computer having a display device, e.g., a CRT (cathode ray tube), LCD (liquid crystal display) monitor, or touch screen for displaying information to the user and optionally a keyboard and a pointing device, e.g., a mouse or a trackball, by which the user can provide input to the computer. Other kinds of devices can be used to provide interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's client device in response to requests received from the web browser.

A number of implementations have been described. Nevertheless, it will be understood that various modifications may be made without departing from the scope of the disclosure. Accordingly, other implementations are within the scope of the following claims.

## Claims

1. A computer-implemented method executed on data processing hardware that causes the data processing hardware to perform operations comprising:
determining, based on a first historical computing usage of a distributed computing system by one or more workloads associated with a user, a first access control band defining a first amount of computing resources of the distributed computing system;
determining, based on a second historical computing usage of the distributed computing system by a zone of workloads, a second access control band defining a second amount of computing resources of the distributed computing system, the zone of workloads comprising a plurality of workloads associated with a plurality of different users;
determining, based on an amount of computing resources of the distributed computing system not defined by the first access control band or the second access control band, a third access control band defining a third amount of computing resources of the distributed computing system;
receiving, from the one or more workloads, a request for a particular amount of computing resources of the distributed computing system;
based on the requested particular amount of computing resources, determining one or more access control bands from the first access control band, the second access control band, and the third access control band; and
allocating at least a portion of the requested particular amount of computing resources to the one or more workloads based on the determined one or more access control bands.

2. The computer-implemented method of claim 1, wherein the first historical computing usage of the distributed computing system comprises a peak-to-average usage ratio of at least one workload associated with the user.

3. The computer-implemented method of claim 2, wherein the operations further comprise:
determining that the peak-to-average usage ratio satisfies a first threshold; and
based on determining that the peak-to-average usage ratio satisfies the first threshold, determining the first amount of computing resources based on an average historical computing usage of the distributed computing system by the one or more workloads over a predetermined amount of time.

4. The computer-implemented method of claim 3, wherein the operations further comprise:
determining that the peak-to-average usage ratio satisfies a second threshold; and
based on determining that the peak-to-average usage ratio satisfies the second threshold, determining the first amount of resources further based on a minimum sustained computing usage of the distributed computing system by the one or more workloads over the predetermined amount of time,
wherein the operations optionally further comprise:
determining that the peak-to-average usage ratio satisfies a third threshold; and
based on determining that the peak-to-average usage ratio satisfies the third threshold, determining the first amount of resources further based on a linear interpolation between the average historical computing usage and the minimum sustained computing usage.

5. The computer-implemented method of one of claims 1 to 4, wherein the second historical computing usage of the distributed computing system comprises an aggregate of an average computing usage by each respective workload of the zone of workloads.

6. The computer-implemented method of one of claims 1 to 5, wherein the first historical computing usage of the distributed computing system comprises at least one of:
a peak-to-average usage ratio by the one or more workloads;
a size of the one or more workloads;
a family indicator of the one or more workloads; or
a growth rate of the one or more workloads.

7. The computer-implemented method of one of claims 1 to 6, wherein:
the first access control band is associated with a first likelihood that the first amount of computing resources will be available for allocation to the one or more workloads associated with the user;
the second access control band is associated with a second likelihood that the second amount of computing resources will be available for allocation to the one or more workloads associated with the user, the second likelihood different from the first likelihood; and
the third access control band is associated with a third likelihood that the third amount of computing resources will be available for allocation to the one or more workloads associated with the user, the third likelihood different from the first likelihood and the second likelihood;
optionally wherein:
the first likelihood is greater than the second likelihood; and
the second likelihood is greater than the third likelihood.

8. The computer-implemented method of one of claims 1 to 7, wherein availability of the second amount of computing resources for allocation to the one or more workloads is based on a resource usage of the zone of workloads.

9. A system comprising:
data processing hardware; and
memory hardware in communication with the data processing hardware, the memory hardware storing instructions that when executed on the data processing hardware cause the data processing hardware to perform operations comprising:
determining, based on a first historical computing usage of a distributed computing system by one or more workloads associated with a user, a first access control band defining a first amount of computing resources of the distributed computing system;
determining, based on a second historical computing usage of the distributed computing system by a zone of workloads, a second access control band defining a second amount of computing resources of the distributed computing system, the zone of workloads comprising a plurality of workloads associated with a plurality of different users;
determining, based on an amount of computing resources of the distributed computing system not defined by the first access control band or the second access control band, a third access control band defining a third amount of computing resources of the distributed computing system;
receiving, from the one or more workloads, a request for a particular amount of computing resources of the distributed computing system;
based on the requested particular amount of computing resources, determining one or more access control bands from the first access control band, the second access control band, and the third access control band; and
allocating at least a portion of the requested particular amount of computing resources to the one or more workloads based on the determined one or more access control bands.

10. The system of claim 9, wherein the first historical computing usage of the distributed computing system comprises a peak-to-average usage ratio of at least one workload associated with the user.

11. The system of claim 10, wherein the operations further comprise:
determining that the peak-to-average usage ratio satisfies a first threshold; and
based on determining that the peak-to-average usage ratio satisfies the first threshold, determining the first amount of computing resources based on an average historical computing usage of the distributed computing system by the one or more workloads over a predetermined amount of time.

12. The system of claim 11, wherein the operations further comprise:
determining that the peak-to-average usage ratio satisfies a second threshold; and
based on determining that the peak-to-average usage ratio satisfies the second threshold, determining the first amount of resources further based on a minimum sustained computing usage of the distributed computing system by the one or more workloads over the predetermined amount of time;
wherein the operations optionally further comprise:
determining that the peak-to-average usage ratio satisfies a third threshold; and
based on determining that the peak-to-average usage ratio satisfies the third threshold, determining the first amount of resources further based on a linear interpolation between the average historical computing usage and the minimum sustained computing usage.

13. The system of one of claims 9 to 12,
wherein the second historical computing usage of the distributed computing system comprises an aggregate of an average computing usage by each respective workload of the zone of workloads; and/or
wherein the first historical computing usage of the distributed computing system comprises at least one of:
a peak-to-average usage ratio by the one or more workloads;
a size of the one or more workloads;
a family indicator of the one or more workloads; or
a growth rate of the one or more workloads.

14. The system of one of claims 9 to 13, wherein:
the first access control band is associated with a first likelihood that the first amount of computing resources will be available for allocation to the one or more workloads associated with the user;
the second access control band is associated with a second likelihood that the second amount of computing resources will be available for allocation to the one or more workloads associated with the user, the second likelihood different from the first likelihood; and
the third access control band is associated with a third likelihood that the third amount of computing resources will be available for allocation to the one or more workloads associated with the user, the third likelihood different from the first likelihood and the second likelihood;
optionally wherein:
the first likelihood is greater than the second likelihood; and
the second likelihood is greater than the third likelihood.

15. The system of one of claims 9 to 14, wherein availability of the second amount of computing resources for allocation to the one or more workloads is based on a resource usage of the zone of workloads.
